(19) Europäisches Patentamt

European Patent Office

Office européen des brevets

(11) **EP 0 642 712 B1**

(12) **EUROPÄISCHE PATENTSCHRIFT**

(45) Veröffentlichungstag und Bekanntmachung des Hinweises auf die Patenterteilung:
**31.05.2000 Patentblatt 2000/22**

(21) Anmeldenummer: **94910354.3**

(22) Anmeldetag: **22.03.1994**

(51) Int. Cl.$^7$: **H04B 1/16**

(86) Internationale Anmeldenummer:
**PCT/DE94/00322**

(87) Internationale Veröffentlichungsnummer:
**WO 94/22230 (29.09.1994 Gazette 1994/22)**

(54) **SCHALTUNGSANORDNUNG ZUR ABLEITUNG EINES STÖRUNGEN IN EINEM EMPFANGENEN STEREO-MULTIPLEXSIGNAL ANZEIGENDEN SIGNALS**

CIRCUIT FOR DERIVING IN A SIGNAL INDICATING INTERFERENCE IN A RECEIVED STEREO MULTIPLEX SIGNAL

CIRCUIT POUR LA DERIVATION D'UN SIGNAL INDICATEUR D'INTERFERENCES DANS UN SIGNAL MULTIPLEX STEREO DE RECEPTION

(84) Benannte Vertragsstaaten:
**AT DE ES FR GB IT PT**

(30) Priorität: **24.03.1993 DE 4309518**

(43) Veröffentlichungstag der Anmeldung:
**15.03.1995 Patentblatt 1995/11**

(73) Patentinhaber:
**Blaupunkt-Werke GmbH**
**31132 Hildesheim (DE)**

(72) Erfinder:
- **CHAHABADI, Djahanyar**
 **D-31139 Hildesheim (DE)**
- **HERRMANN, Matthias**
 **D-31141 Hildesheim (DE)**

- **VOGT, Lothar**
 **D-31249 Hohenhameln (DE)**
- **Kaesser, Juergen**
 **D-31199 Diekholzen (DE)**

(56) Entgegenhaltungen:
- **SIGNAL PROCESSING IV: THEORIES AND APPLICATIONS, Bd.2, 8. September 1988, GRENOBLE,FR Seiten 499 - 502, XP93955 REICH ET AL 'Digital FM-Stereo Demodulation and Decoding'**
- **DIGITAL SIGNAL PROCESSING, Bd.2, Nr.2, Januar 1992, ORLANDO,FL,US Seiten 2 - 13, XP387796 BAKHRU 'Communications Receiver Design Using Digital Signal Processing'**

**Beschreibung**

Die Erfindung betrifft eine Schaltungsanordnung zur Ableitung eines Störungen in einem empfangenen Stereo-Multiplexsignal anzeigenden Signals, wobei das Stereo-Multiplexsignal als digitales Signal mit einer ersten Abtastrate vorliegt, welche wesentlich größer als das Doppelte der oberen Grenze des Nutzfrequenzbereichs des Stereo-Multiplexsignals ist.

Spektralanteile oberhalb des Nutzfrequenzbereichs eines Stereo-Multiplexsignals bedeuten Störungen beim Empfang des Stereo-Multiplexsignals, welche sich meistens ohne weitere Maßnahmen auch als hörbare Störungen in den wiedergegebenen Audiosignalen bemerkbar machen. So senden beispielsweise Zündfunken von Brennkraftmaschinen kurze Hochfrequenzimpulse innerhalb eines weiten Frequenzbereichs aus, die zu obengenannten Spektralanteilen im Stereo-Multiplexsignal führen. Insbesondere für Autoradios sind daher Schaltungsanordnungen bekanntgeworden, welche in Abhängigkeit vom Auftreten derartiger Spektralanteile die Audiosignale in geeigneter Weise beeinflussen, beispielsweise eine vor dem Auftreten der Störung vorhandene Amplitude kurzzeitig beibehalten.

Aufgabe der vorliegenden Erfindung ist es, eine Schaltungsanordnung anzugeben, welche die Spektralanteile des Multiplexsignals, die Störungen anzeigen, in günstiger Weise gewinnt, wobei insbesondere die Belange einer digitalen Signalverarbeitung zu berücksichtigen sind - beispielsweise ein möglichst geringer Bedarf an Rechenleistung.

Diese Aufgabe wird erfindungsgemäß dadurch gelöst, daß das empfangene Stereo-Multiplexsignal über ein Tiefpaßfilter geleitet wird, daß das tiefpaßgefilterte und das empfangene Stereo-Multiplexsignal je einer Dezimation auf eine zweite Abtastrate unterworfen werden, die größer als das Doppelte der oberen Grenze des Nutzfrequenzbereichs des Stereo-Multiplexsignals ist, und daß beide Stereo-Multiplexsignale mit der zweiten Abtastrate voneinander subtrahiert werden.

Die erfindungsgemäße Schaltungsanordnung hat den Vorteil, daß das die Störungen anzeigende Signal im wesentlichen den oben beschriebenen Spektralanteilen entspricht, jedoch einen niedrigeren Frequenzbereich einnimmt. Dadurch ist einerseits eine weitere Verarbeitung mit einer niedrigeren Abtastrate möglich. Andererseits kann dieses Signal entsprechend den Erfordernissen der jeweils anschließenden Schaltungen weiterverarbeitet werden, da es die wesentlichen Charakteristiken der oben genannten Spektralanteile enthält. So kann beispielsweise ein mit der erfindungsgemäßen Schaltungsanordnung abgeleitetes Signal zur Unterdrückung von Störungen, die durch Zündfunken bedingt sind, eine Schaltung zur vorübergehenden Speicherung der Amplitude des Multiplexsignals steuern. Ein mit der erfindungsgemäßen Schaltungsanordnung abgeleitetes Signal kann ferner nach geeigneter Weiterverarbeitung durch Filter und gegebenenfalls Kombination mit anderen Signalen zur Maskierung der Audiosignale und zur Stereo/Mono-Umschaltung genutzt werden.

Eine Weiterbildung der erfindungsgemäßen Schaltungsanordnung besteht darin, daß das Tiefpaßfilter einen innerhalb des Nutzfrequenzbereichs allmählich abfallenden Frequenzgang aufweist. Ein derartiges Filter weist einen relativ geringen Aufwand auf und genügt geringeren Qualitätsanforderungen.

Bei dieser Weiterbildung der Erfindung ist jedoch vorzugsweise vorgesehen, daß das tiefpaßgefilterte Stereo-Multiplexsignal mit der zweiten Abtastrate ein Filter zur Kompensation des abfallenden Frequenzganges des Tiefpaßfilters durchläuft. Hierdurch ist trotz der Verwendung von relativ einfachen Filtern ein geradliniger Frequenzgang im Nutzfrequenzbereich möglich.

Insofern eignet sich die erfindungsgemäße Schaltungsanordnung auch zu einer Dezimation der Abtastrate des Stereo-Multiplexsignals im Nutzfrequenzbereich, so daß bei einer anderen Weiterbildung der Erfindung vorgesehen ist, daß das Ausgangssignal des Filters zur Kompensation ferner über eine Schaltung zur Störunterdrückung einem Stereodecoder zuführbar ist.

Die erfindungsgemäße Schaltungsanordnung kann jedoch auch derart ausgeführt sein, daß das Tiefpaßfilter einen über einen wesentlichen Teil des Nutzfrequenzbereichs konstanten Frequenzgang aufweist. Hierbei ist dann selbst für hohe Anforderungen nach der Dezimation kein Kompensationsfilter erforderlich.

Eine vorteilhafte Ausgestaltung der Erfindung besteht darin, daß die erste Abtastrate 456 kHz und die zweite Abtastrate 228 kHz beträgt.

Ausführungsbeispiele der Erfindung sind in der Zeichnung anhand mehrerer Figuren dargestellt und in der nachfolgenden Beschreibung näher erläutert. Es zeigt:

Fig. 1     ein erstes Ausführungsbeispiel,

Fig. 2     ein zweites Ausführungsbeispiel,

Fig. 3     ein drittes Ausführungsbeispiel,

Fig. 4     eine schematische Darstellung der Spektren der in den Ausführungsbeispielen nach den Figuren 1 bis 3 auftretenden Signale und

Fig. 5    ein Blockschaltbild eines Rundfunkempfängers mit einer erfindungsgemäßen Schaltungsanordnung.

Gleiche Teile sind in den Figuren mit gleichen Bezugszeichen versehen. Ausführungsbeispiele sowie Teile davon sind zwar als Blockschaltbilder dargestellt. Dieses bedeutet jedoch nicht, daß die erfindungsgemäße Schaltungsanordnung auf eine Realisierung mit Hilfe von einzelnen den Blöcken entsprechenden Schaltungen beschränkt ist. Die erfindungsgemäße Schaltungsanordnung ist vielmehr in besonders vorteilhafter Weise mit Hilfe von hochintegrierten Schaltungen realisierbar. Dabei kann beispielsweise ein digitaler Signalprozessor eingesetzt werden, welcher bei geeigneter Programmierung die im Blockschaltbild dargestellten Verarbeitungsschritte durchführt. Die erfindungsgemäße Schaltungsanordnung kann zusammen mit weiteren Schaltungsanordnungen innerhalb einer integrierten Schaltung wesentliche Teile eines Rundfunkempfängers bilden.

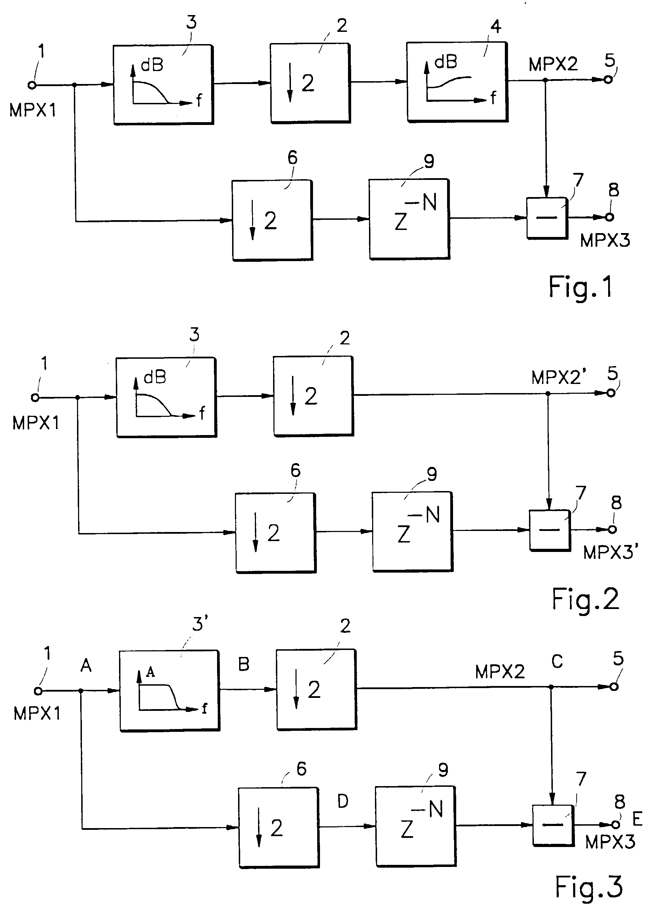

Einem Eingang 1 des Ausführungsbeispiels nach Fig. 1 wird ein digitales Stereo-Multiplexsignal MPX1 zugeleitet, dessen Abtastrate 456 kHz beträgt, was ein ganzzahliges Vielfaches der Trägerfrequenz des Radiodatensignals (57 kHz) ist. Diese hohe Abtastfrequenz erfordert jedoch eine große Anzahl von Rechenoperationen je Sekunde. Bei einem digitalen Rundfunkempfänger ist es deshalb vorteilhaft, mit möglichst geringen Abtastraten zu arbeiten, die an die Bandbreite des jeweiligen Signals angepaßt sind. Deshalb wird das Signal MPX1 bei 2 einer Abtastratenhalbierung unterzogen, wozu zuvor eine Tiefpaßfilterung 3 erforderlich ist. Da jedoch das an sich notwendige Tiefpaßfilter mit einem geradlinigen Frequenzgang über den größten Teil des Durchlaßbereiches und mit einem steilen Abfall im Bereich der oberen Grenzfrequenz sehr aufwendig ist, wird ein Tiefpaßfilter 3 verwendet, das einen allmählichen Abfall aufweist. Ein Kompensationsfilter 4 mit einem entgegengesetzten Frequenzgang hebt jedoch den dadurch entstehenden Fehler wieder auf.

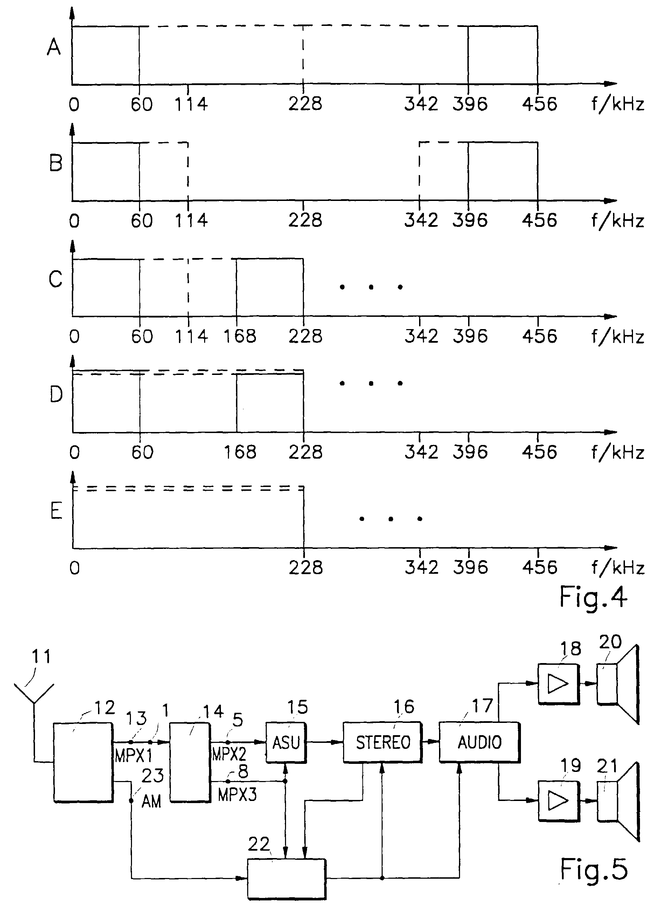

Am Ausgang 5 des Kompensationsfilters 4 steht dann ein Signal MPX2 zur Verfügung, das zur Gewinnung der wiederzugebenden Audiosignale weiterverarbeitet werden kann, wie es beispielsweise später anhand von Fig. 5 erläutert wird.

Zur Gewinnung eines die Spektralanteile oberhalb des Nutzfrequenzbereichs anzeigenden Signals wird jedoch das Multiplexsignal MPX2 bei 7 von dem Multiplexsignal MPX1 subtrahiert, das bei 6 ebenfalls einer Abtastratenhalbierung unterzogen wurde und dadurch eine Abtastrate von 228 kHz aufweist. Am Ausgang 8 des Subtrahierers steht dann das gewünschte die Störungen anzeigende Signal zur Verfügung, welches sich zwar in einem unteren Frequenzbereich befindet, jedoch die Spektralanteile des oberen Frequenzbereichs enthält. Dieses Signal wird im Zusammenhang mit der weiteren Erläuterung der Ausführungsbeispiele der Erfindung mit MPX3 bezeichnet. Zum Ausgleich der Laufzeiten in den Filtern 3 und 4 ist eine Verzögerung 9 um N Abtastperioden vorgesehen. Bei einer praktisch ausgeführten erfindungsgemäßen Schaltungsanordnung hat das Filter 3 folgende Form:

$$B(z) = 0{,}159(1+z^{-6})^6 \cdot (1+1{,}41z^{-1}+z^{-2}),$$

während das Kompensationsfilter 4 die Form hat:

$$C(z) = c_1 z^{-1} + c_2 z^{-2} + c_3 z^{-3} + c_4 z^{-4} + c_5 z^{-5} + c_6 z^{-6} + c_7.$$

Der ersichtlich größere Rechenaufwand für das Kompensationsfilter 4 wird jedoch auf einer niedrigeren Frequenzebene benötigt, so daß er sich in dem Gesamtaufwand weniger stark bemerkbar macht.

Das Ausführungsbeispiel gemäß Fig. 2 gleicht im wesentlichen demjenigen nach Fig. 1, es ist allerdings kein Kompensationsfilter 4 vorgesehen, so daß das Multiplexsignal MPX2' auch im Nutzfrequenzbereich einen Abfall in Richtung auf höhere Frequenzen aufweist. Außerdem enthält das Signal MPX3' Nutzsignalanteile, da das Nutzsignal bei 7 nicht vollständig vom Nutzsignalanteil des Signals MPX1 subtrahiert wird. Falls dieses im Einzelfall toleriert werden kann, weist das Ausführungsbeispiel nach Fig. 2 immerhin noch den Vorteil auf, daß wie beim Ausführungsbeispiel nach Fig. 1 der Rechenaufwand insbesondere dadurch gering gehalten wird, daß auf der höheren Frequenzebene ein einfaches Filter mit weniger Rechenoperationen vorgesehen ist.

Bei dem Ausführungsbeispiel nach Fig. 3 ist vor der Dezimation 2 ein Filter 3' mit einem im Nutzfrequenzbereich flachen Frequenzgang vorgesehen. Deshalb ist ein Kompensationsfilter nicht mehr erforderlich. Es wird jedoch ein höherer Rechenaufwand für das Filter 3' auf der höheren Frequenzebene benötigt. Punkte der Schaltungsanordnung nach Fig. 3 sind gleichlautend mit denjenigen Zeilen der Fig. 4 bezeichnet, die Spektren der an diesen Punkten auftretenden Signale darstellen.

Zeile A stellt das Spektrum des Signals MPX1 dar, wobei sich im Frequenzbereich von 0 kHz bis 60 kHz das Nutzspektrum des Stereo-Multiplexsignals und - gestrichelt dargestellt - zwischen 60 kHz und 228 kHz ein Störspektrum befinden. Die Darstellung ist insofern stark schematisiert, daß die Amplituden unabhängig vom tatsächlichen Vorhandensein der einzelnen Spektralanteile als konstant angenommen sind. Entsprechend gespiegelte Signalanteile befinden sich zwischen 228 kHz und der Abtastfrequenz von 456 kHz. Durch die Filterung bei 3' (Fig. 3) entsteht das in Zeile B dargestellte Spektrum. Durch die Dezimation bei 2 wird dann der Bereich zwischen 342 kHz und 456 kHz (Zeile C) in den Bereich zwischen 114 kHz und 228 kHz verschoben.

Durch die Dezimation des Signals MPX1 bei 6 entsteht das in Zeile D dargestellte Signal, bei welchem sich ein Nutzspektrum zwischen 0 kHz und 60 kHz mit einem Störspektrum von 60 kHz bis 228 kHz und ein Nutzspektrum zwischen 168 kHz und 228 kHz mit einem Störspektrum von 0 kHz bis 168 kHz überlagern. Durch die Subtraktion bei 7 entsteht das in Zeile E dargestellte Signal ohne die Nutzspektren. Dieses Signal kann in geeigneter Weise weiter ausgewertet werden, beispielsweise durch Betragsbildung, Integration und/oder weitere Dezimation.

Fig. 5 zeigt wesentliche Teile eines Rundfunkempfängers, insbesondere solche Teile, die zur Erläuterung der Anwendung der erfindungsgemäßen Schaltungsanordnung innerhalb eines Rundfunkempfängers erforderlich sind. Das über eine Antenne 11 empfangene Signal wird in einem Empfangsteil (Tuner) 12 in an sich bekannter Weise verstärkt, selektiert und demoduliert. Von einem Ausgang 13 des Empfangsteils 12 wird das Stereo-Multiplexsignal MPX1 dem Eingang 1 einer erfindungsgemäßen Schaltungsanordnung 14 zugeleitet. Dem Ausgang 5 der erfindungsgemäßen Schaltungsanordnung 14 wird das Stereo-Multiplexsignal MPX2 entnommen und über eine Schaltung 15 zur automatischen Störunterdrückung einem Stereodecoder 16 zugeleitet, an den sich ein Audioprozessor 17 anschließt. Ausgänge des Audioprozessors sind dann an NF-Verstärker 18, 19 angeschlossen, welche Lautsprecher 20, 21 steuern.

Das von der erfindungsgemäßen Schaltungsanordnung 14 abgeleitete Störungen anzeigende Signal MPX3 wird über den Ausgang 8 einem Steuereingang der Schaltung 15 zugeführt. Dort werden, wie bereits beschrieben, im Falle von Störungen gestörte Abtastwerte durch zuvor empfangene richtige Abtastwerte innerhalb des Stereo-Multiplexsignals ersetzt. Eine derartige Schaltung ist in der deutschen Patentanmeldung P 43 30 892.9 der Anmelderin beschrieben.

Das Signal MPX3 gelangt ferner zu einer Schaltung 22 zur Ableitung von Signalen, welche die Empfangsqualität wiedergeben. Dieser Schaltung wird außerdem von einem Ausgang 23 des Empfangsteils 12 ein Signal AM zugeführt, das durch Amplitudendemodulation des FM-Zwischenfrequenzsignals entstanden ist. Außerdem erhält die Schaltung 22 vom Stereodecoder 16 Signale, welche die Symmetrie der Seitenbänder des modulierten Hilfsträgers bezeichnen. Aus diesen Signalen formt die Schaltung 22 ein die Empfangsqualität bezeichnendes Signal, das bei dem in Fig. 5 dargestellten Rundfunkempfänger zur Steuerung der Stereo/Mono-Umschaltung dem Stereodecoder 16 und zur vorübergehenden Lautstärkeverminderung dem Audioprozessor 17 zugeleitet wird. Einzelheiten einer Schaltung 22 sind in der deutschen Patentanmeldung P 43 09 518.6 der Anmelderin erläutert.

## Patentansprüche

1.  Schaltungsanordnung zur Ableitung eines Störungen in einem empfangenen Stereo-Multiplexsignal anzeigenden Signals, wobei das Stereo-Multiplexsignal als digitales Signal mit einer ersten Abtastrate vorliegt, welche wesentlich größer als das Doppelte der oberen Grenze des Nutzfrequenzbereichs des Stereo-Multiplexsignals ist, dadurch gekennzeichnet, daß das empfangene Stereo-Multiplexsignal über ein Tiefpaßfilter (3, 3') geleitet wird, daß das tiefpaßgefilterte und das empfangene Stereo-Multiplexsignal je einer Dezimation (2, 6) auf eine zweite Abtastrate unterworfen werden, die größer als das Doppelte der oberen Grenze des Nutzfrequenzbereichs des Stereo-Multiplexsignals ist, und daß beide Stereo-Multiplexsignale mit der zweiten Abtastrate voneinander subtrahiert werden.

2.  Schaltungsanordnung nach Anspruch 1, dadurch gekennzeichnet, daß das Tiefpaßfilter (3) einen innerhalb des Nutzfrequenzbereichs allmählich abfallenden Frequenzgang aufweist.

3.  Schaltungsanordnung nach Anspruch 2, dadurch gekennzeichnet, daß das tiefpaßgefilterte Stereo-Multiplexsignal mit der zweiten Abtastrate ein Filter (4) zur Kompensation des abfallenden Frequenzganges des Tiefpaßfilters (3) durchläuft.

4.  Schaltungsanordnung nach Anspruch 3, dadurch gekennzeichnet, daß das Ausgangssignal des Filters (4) zur Kompensation ferner über eine Schaltung (15) zur Störunterdrückung einem Stereodecoder (16) zuführbar ist.

5.  Schaltungsanordnung nach Anspruch 1, dadurch gekennzeichnet, daß das Tiefpaßfilter (3') einen über einen wesentlichen Teil des Nutzfrequenzbereichs konstanten Frequenzgang aufweist.

6.  Schaltungsanordnung nach einem der vorhergehenden Ansprüche, dadurch gekennzeichnet, daß die erste Abtastrate 456 kHz und die zweite Abtastrate 228 kHz beträgt.

**Claims**

1. Circuit arrangement for deriving a signal which indicates interference in a received stereo multiplex signal, the stereo multiplex signal being present as a digital signal with a first sampling rate, which is significantly greater than twice the upper limit of the useful frequency range of the stereo multiplex signal, characterized in that the received stereo multiplex signal is conducted via a low-pass filter (3, 3'), in that the low-pass-filtered stereo multiplex signal and the received stereo multiplex signal are each subjected to a decimation (2, 6) to a second sampling rate, which is greater than twice the upper limit of the useful frequency range of the stereo multiplex signal, and in that the two stereo multiplex signals with the second sampling rate are subtracted from one another.

2. Circuit arrangement according to Claim 1, characterized in that the low-pass filter (3) has a frequency response that falls gradually within the useful frequency range.

3. Circuit arrangement according to Claim 2, characterized in that the low-pass-filtered stereo multiplex signal with the second sampling rate passes through a filter (4) in order to compensate for the falling frequency response of the low-pass filter (3).

4. Circuit arrangement according to Claim 3, characterized in that the output signal of the filter (4) can furthermore be fed, for the purpose of compensation, via a circuit (15) for interference suppression to a stereo decoder (16).

5. Circuit arrangement according to Claim 1, characterized in that the low-pass filter (3') has a frequency response that is constant over a significant part of the useful frequency range.

6. Circuit arrangement according to one of the preceding claims, characterized in that the first sampling rate is 456 kHz and the second sampling rate is 228 kHz.

**Revendications**

1. Circuit pour donner un signal indiquant les perturbations d'un signal multiplex stéréo reçu,

   le signal multiplex stéréo existant sous forme de signal numérique avec un premier taux de détection beaucoup plus grand que le double de la limite supérieure de la plage de fréquences utiles du signal multiplex stéréo, caractérisé en ce que
   le signal multiplex stéréo reçu passe dans un filtre passe-bas (3, 3'),
   le signal multiplex stéréo reçu, filtré par un filtre passe-bas, est soumis par une décimation (2, 6) à un second taux de détection plus grand que le double de la limite supérieure de la plage de fréquences utiles du signal multiplex stéréo, et
   les deux signaux multiplex stéréo sont retranchés l'un de l'autre avec le second taux de détection.

2. Circuit selon la revendication 1,
   caractérisé en ce que

   le filtre passe-bas (3) présente une courbe de fréquence progressivement descendante dans la plage de fréquences utiles.

3. Circuit selon la revendication 2,
   caractérisé en ce que

   le signal multiplex stéréo filtré par le filtre passe-bas traverse, avec deux taux de détection, un filtre (4) pour compenser la courbe de fréquence décroissante du filtre passe-bas (3).

4. Circuit selon la revendication 3,
   caractérisé en ce que

   le signal de sortie du filtre (4) est appliqué, pour sa compensation, à un décodeur stéréo (16) en passant par un circuit (15) supprimant les perturbations.

5. Circuit selon la revendication 1,

caractérisé en ce que

le filtre passe-bas (3') présente une courbe de fréquence constante sur une partie essentielle de sa plage de fréquences utiles.

6. Circuit selon l'une quelconque des revendications précédentes,
caractérisé en ce que

le premier taux de détection est égal à 456 kHz et le second taux de détection est égal à 228 kHz.

Fig.1

Fig.2

Fig.3

Fig.4

Fig.5